# EUROPEAN PATENT SPECIFICATION

(11) **EP 4 203 088 B1**
(45) Date of publication and mention of the grant of the patent: **11.06.2025**
(21) Application number: 22853362.6
(22) Date of filing: 29.07.2022
(51) Int. Cl.: H01M 4/04, F26B 13/20, F26B 3/353, F26B 21/00, B05C 9/14, F26B 13/14, F26B 3/02

(54) **DRYING APPARATUS FOR MANUFACTURING ELECTRODE AND METHOD FOR MANUFACTURING ELECTRODE USING SAME**
TROCKNUNGSVORRICHTUNG ZUR HERSTELLUNG EINER ELEKTRODE UND VERFAHREN ZUR HERSTELLUNG EINER ELEKTRODE DAMIT
APPAREIL DE SÉCHAGE PERMETTANT DE FABRIQUER UNE ÉLECTRODE ET PROCÉDÉ DE FABRICATION D'ÉLECTRODE UTILISANT CE DERNIER

(30) Priority: 05.08.2021 KR 20210103377; 07.07.2022 KR 20220083725
(43) Date of publication of application: 28.06.2023
(73) Proprietor: LG Energy Solution, Ltd., Seoul 07335 (KR)
(72) Inventor: LEE, Doo Hyun, Daejeon 34122 (KR); SON, Jae Huoung, Daejeon 34122 (KR); AHN, Chang Bum, Daejeon 34122 (KR); KIM, Tae Yeon, Daejeon 34122 (KR)
(74) Representative: Plasseraud IP
(86) International application number: PCT/KR2022/011173
(87) International publication number: WO 2023/013984

(56) References cited:
- WO-A1-2011/001648
- JP-A- 2010 225 467
- JP-A- 2011 143 388
- JP-A- 2012 209 074
- JP-A- 2014 184 364
- JP-A- 2019 145 420
- JP-A- H10 228 898
- KR-A- 20170 094 913
- KR-B1- 102 170 893
- NARAE NANOTECH: "Developed a large-area Air Floating Coater for the 8th generation and older", 30 September 2014 (2014-09-30), Korea, pages 1 - 205, XP009543589, Retrieved from the Internet <URL:https://scienceon.kisti.re.kr/srch/selectPORSrchReport.do?cn=TRKO201600017079>
- KIM DONG HWAM: "Fine Gap Control Using Pneumatic Servo System", JOURNAL OF THE KOREAN SOCIETY OF PRECISION ENGINEERING, vol. 19, no. 2, 1 December 2002 (2002-12-01), pages 45 - 56, XP093031869

## Description

### [Technical Field]

The present invention relates to a drying device for manufacturing an electrode and a method of manufacturing an electrode using the same.

This application claims the benefit of priority based on Korean Patent Applications Nos. 10-2021-0103377, filed on August 5, 2021, and 10-2022-0083725, filed on July 7, 2022.

### [Background Art]

Lithium secondary batteries include electrodes including active materials exhibiting electrical activity, and these electrodes are manufactured by applying an active material slurry on electrode base materials to form mixture layers and drying the mixture layers. For a manufacturing process of the electrode, a slurry coating device and a drying device are generally used when manufacturing the electrode, and the drying device includes a dryer for drying a mixture layer of an electrode base material, and traveling rollers provided outside an outlet of the dryer and configured to move the dried electrode base material on which the mixture layer is dried.

Here, since the dryer removes a solvent in the slurry using high heat, the electrode base material exiting the outlet of the dryer has a thermal expansion deviation between a coated portion in which the mixture layer is formed and an uncoated portion in which the mixture layer is not formed. The thermal expansion deviation causes a problem in that the electrode base material is wrinkled or folded in a process direction in the uncoated portion while traveling.

According to the related art, in order to solve the above problem, a cooling device for cooling the electrode base material is used or a coating/drying device to which a crease roller for smoothing wrinkles or folding is applied has been developed. However, the above devices require separate spaces for introducing a cooling device or a roller, and once the above devices are installed, it is difficult to change a specification such as a width of the electrode so that there is a problem in that processability is degraded. In addition, when an uncoated portion is formed between a plurality of coated portions, there may be a limitation in that an effect of improving wrinkles or folding formed in the uncoated portion is insignificant or the coated portion is damaged.

### [Related Art Document]

### [Patent Document]

Korean Registered Patent No. 10-1810146
KR 102 170 893 B1
JP 2014 184364 A
WO 2011/001648 A1
JP 2019 145420 A
JP 2010 225467 A
JP 2011 143388 A

### [Disclosure]

### [Technical Problem]

An object of the present invention is to provide a drying device for manufacturing an electrode and a method of manufacturing an electrode using the same, which are capable of improving a thermal expansion deviation of an electrode base material which occurs between a coated portion and an uncoated portion, regardless of a shape or numbers of the coated portions to which an electrode slurry is applied and preventing wrinkles and/or a folding phenomenon, which are induced in the uncoated portion.

### [Technical Solution]

In one embodiment of the present invention, there is provided a drying device for manufacturing an electrode, which includes a dryer configured to dry a coated portion of an electrode base material in which the coated portion to which electrode slurry is applied is formed on at least one surface of the electrode base material and an uncoated portion to which the electrode slurry is not applied, and a transfer part coupled to an outlet of the dryer and configured to move the dried electrode base material in a process direction, wherein the transfer part includes a floating part configured to float the electrode base material using air and provided with an air floating plate, and a traveling part configured to move the floated electrode base material in the process direction.

The air floating plate includes discharge ports configured to discharge air to a surface on which the electrode base material travels, and the discharge ports are included in the entirety of a surface of the air floating plate or included only in a region in which the coated portion of the electrode base material travels.

The discharge ports of the region in which the coated portion of the electrode base material travels may have an average diameter ranging from 0.005 mm to 10 mm.

When the discharge ports are included in the entirety of a surface of the air floating plate, in order to control a pressure of the air discharged in each region in which the coated portion and the uncoated portion of the electrode base material travel, a diameter and/or a frequency of the discharge port may be constantly controlled.

Discharge ports in a region in which the coated portion of the electrode base material travels may have an average diameter ranging from 50% to 99% of that of discharge ports in a region in which the uncoated portion of the electrode base material on which the electrode slurry is not applied travels.

The number of discharge ports per unit area of a region in which the coated portion of the electrode base material travels may range from 50 % to 99% of the number of discharge ports per unit area of a region in which the uncoated portion of the electrode base material travels.

The discharge ports are provided to form an inclined angle of 30° to 80° with the surface of the air floating plate in a process direction of the electrode base material.

The air floating plate may include vacuum suction holes configured to suction the discharged air at positions adjacent to the discharge ports.

The traveling part may include a tilting machine configured to tilt the air floating plates, or conveyors disposed at a front end and a rear end of the floating part and configured to slide the electrode base material in the process direction.

In another embodiment of the present invention, there is provided a method of manufacturing an electrode using the above-defined drying device, which includes drying an electrode base material in which electrode slurry is applied on at least one surface of the electrode base material at a high temperature, and floating and transferring the high-temperature dried electrode base material using air.

In the transferring of the electrode base material, the floating of the electrode base material may be performed by air discharged from the discharge ports provided in the air floating plate.

A pressure of the air discharged from the discharge ports may range from 0.01 MPa to 0.5 MPa.

When the discharge ports are included in the entirety of a surface of the air floating plate, a pressure of the air discharged in a region in which a coated portion of the electrode base material travels may range from 0.05 MPa to 0.4 MPa, and a pressure of the air discharged in a region in which an uncoated portion of the electrode base material travels may range from 0.01 MPa to 0.2 MPa.

The air used in the transferring of the electrode base material may have a temperature ranging from -10 °C to 30 °C.

The transferring of the electrode base material may be performed at a transfer speed ranging from 1 mm/s to 20 mm/s.

### [Advantageous Effects]

A drying device for manufacturing an electrode according to the present invention includes a floating part capable of floating and moving an electrode base material to a transfer part, which transfers the dried electrode base material, using air and cooling the electrode base material, thereby preventing wrinkles and/or a folding problem induced in the uncoated portion of the electrode base material. In addition, in the floating part, since an air floating plate in which the average diameter of discharge ports and/or the number of the discharge ports per unit area are controlled according to the specifications of an electrode to be manufactured can be replaced, there is an advantage of excellent processability.

### [Brief Description of the Drawings]

FIG. 1 is a schematic diagram illustrating a drying device for manufacturing an electrode according to the present invention.
FIG. 2 is a cross-sectional structural diagram illustrating a floating part of a transfer part provided in the drying device for manufacturing an electrode according to the present invention.
FIGS. 3 to 5 are diagrams illustrating one example which shows a surface structure of an air floating plate having a single plate-shaped structure according to the present invention.
FIGS. 6 to 7 are diagrams illustrating one example which shows a structure of an air floating plate having a structure in which a plurality of rod shapes are assembled according to the present invention.
FIG. 8 is a perspective view illustrating one example of a transfer part provided in the drying device for manufacturing an electrode according to the present invention.

### (Detailed Embodiment)

The present invention may be modified into various forms and may have a variety of embodiments, and therefore, specific embodiments will be described in detail.

However, the embodiments are not to be taken in a sense which limits the present invention to the specific embodiments and should be construed to include all modifications, equivalents, or substituents falling within the technical scope of the present invention.

In the present invention, the terms "comprising," "having," and the like are used to specify the presence of a feature, a number, a step, an operation, a component, an element, or a combination thereof described herein, and they do not preclude the presence or addition of one or more other features, numbers, steps, operations, components, elements, or combinations thereof.

In addition, in the present invention, when a portion of a layer, a film, a region, a plate, or the like is described as being "on" another portion, this includes not only a case in which the portion is "directly on" another portion but also a case in which still another portion is present between the portion and other portion. Conversely, when a portion of a layer, a film, a region, a plate, or the like is described as being "under" another portion, this includes not only a case in which the portion is "directly under" another portion but also a case in which still another portion is present between the portion and other portion. In addition, in the present application, being disposed "on" may include the case of being disposed not only on an upper portion but also on a lower portion.

Hereinafter, the present invention will be described in more detail.

### Drying device for manufacturing electrode

In one embodiment of the present invention, there is provided a drying device for manufacturing an electrode, which includes a dryer configured to dry a coated portion of an electrode base material in which the coated portion to which an electrode slurry is applied is formed on at least one surface of the electrode base material and an uncoated portion to which the electrode slurry is not applied, and a transfer part coupled to an outlet of the dryer and configured to move the dried electrode base material in a process direction, wherein the transfer part includes a floating part configured to float the electrode base material using air and provided with an air floating plate, and a traveling part configured to move the floated electrode base material in the process direction.

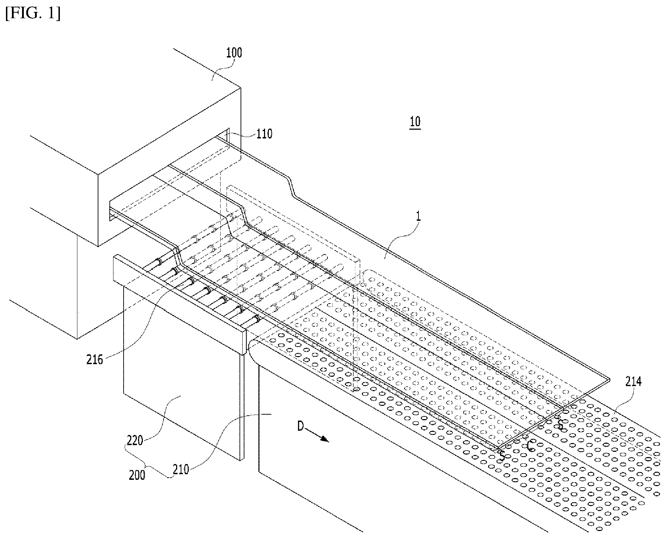

FIG. 1 is a perspective view illustrating the drying device for manufacturing an electrode according to the present invention. Referring to FIG. 1, the drying device 10 for manufacturing an electrode according to the present invention includes a dryer 100 configured to dry an applied electrode slurry after the electrode slurry for forming an electrode mixture layer is applied to the electrode base material, and a transfer part 200 configured to move the electrode base material 1 in a process direction D when the electrode base material 1 on which the applied electrode slurry is dried exits the dryer 100.

Here, the dryer 100 may include a housing and a plurality of heating elements provided in the housing. An inlet (not shown) through which the electrode base material (or an electrode current collector) 1, which has passed through a coater where an electrode slurry containing one or more electrode active materials is applied on a surface of the electrode base material, is provided on one side of the housing, and an outlet 110 through which the electrode base material (or the electrode current collector) exits is provided on the other side of the housing. The electrode base material 1 passing through an inside of the housing and discharged to the outside of the housing through the outlet travels along the transfer part 200 coupled to a rear side of the outlet 110 and is wound around an electrode recovery roller.

The plurality of heating elements generate heat due to supply of electric energy and are installed inside the housing. Specifically, the plurality of heating elements are disposed above the electrode base material 1 in the process direction D of the electrode base material 1. When the plurality of heating elements generate heat, due to the radiant heat, the electrode slurry applied to an upper surface of the electrode base material, that is, the coated portion, is dried and cured. Specifically, the dry curing of the coated portion may be performed by heating the coated portion with the radiant heat of the heating elements to remove a solvent inside the electrode slurry. To this end, in the inside of the housing, an internal temperature of a space in which the plurality of heating elements are disposed may be controlled to a temperature capable of volatilizing the solvent, and specifically, may be controlled to a temperature ranging from 120 °C to 150 °C. In addition, the heating element may be, for example, a halogen lamp. A heat reflecting plate for minimizing the loss of radiant heat implemented in the plurality of heating elements and surrounding an upper surface of each heating element to transmit the radiant heat to the electrode base material may be installed inside the housing.

In addition, the drying device 10 for manufacturing an electrode according to the present invention has a structure in which the transfer part 200 for moving the dried electrode base material 1 in the process direction D is continuously coupled to the outlet 110 of the dryer. The transfer part 200 includes a floating part 210 configured to float the electrode base material 1 using air and a traveling part 220 configured to move the floated electrode base material 1 in the process direction D.

Here, the floating part 210 includes an air floating plate 214 which is installed perpendicular to parallel to the process direction D of the electrode base material and in which a plurality of discharge ports for blowing air to the surface of the electrode base material 1 are provided in the process direction D.

The air floating plate 214 may discharge air to the surface of the electrode base material 1 through the provided discharge ports, thereby floating the dried electrode base material 1 and preventing wrinkles and/or a folding phenomenon from occurring in the uncoated portion in which the electrode slurry is not applied.

Specifically, when the electrode base material 1 to which the electrode slurry is applied is dried at a high temperature, wrinkles and/or a folding phenomenon may occur in the uncoated portion due to a thermal expansion deviation between the coated portion to which the electrode slurry is applied and the uncoated portion to which the electrode slurry is not applied. In particular, in a surface contact transfer method such as a roll-to-roll method, tension is generated in the process direction of the electrode base material 1. When the tension is applied to the electrode base material 1 having a high temperature by drying at a high temperature, wrinkles and/or a folding may strongly occur between the coated portion and the uncoated portion of the electrode base material 1. However, according to the present invention, air is discharged on the surface of the electrode base material 1 dried at a high temperature so that cooling of the electrode base material may be promoted. In addition, along with the cooling of the electrode base material 1, the electrode base material 1 may be floated and moved, and thus the tension applied to the electrode base material may be minimized so that it is possible to suppress the occurrence of wrinkles and/or folding between the coated portion to which the electrode slurry is applied and the uncoated portion to which the electrode slurry is not applied.

In addition, since the air floating plate 214 has a plate shape, it is possible to prevent the electrode base material from shaking due to distortion between rollers or bearings according to rotation occurring in an air floating system in a form in which a plurality of rollers or a plurality of bearings are combined, and there is an advantage being able to minimize the generation of dust during the process and an advantage of safe equipment operation and easy maintenance.

In addition, a lower end of the air floating plate 214 is connected to an air supply part 216 for supplying air to a discharge port, and the air supply part 216 may include an air blower (not shown) for generating air. In this case, the air blower may include a motor for providing a driving force and an impeller which is rotated due to the driving of the motor, and in addition to the air blower, an air compressor and an air control unit for controlling a flow rate and a pressure of air may be further provided.

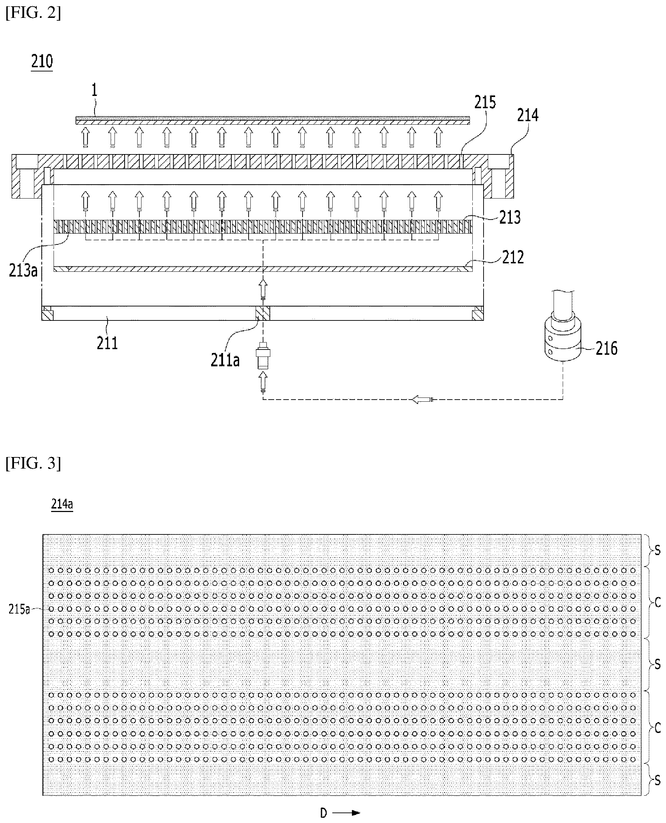

In addition, FIG. 2 is a schematic cross-sectional view illustrating a structure of the floating part 210. Referring to FIG. 2, in the floating part 210, an air floating filter 213 is positioned between the air supply part 216 and the air floating plate 214 and may reduce a deviation of a supply amount of air discharged through a discharge port 215 of the air floating plate 214 and remove foreign materials in the air. To this end, the air floating filter 213 may have a mesh-sized mesh structure and include a micro channel structure in which an open pore portion guides and discharges air. In addition, in order to maintain insulation, the air floating filter 213 may be made of an insulating material. Specifically, the air floating filter 213 may employ a heat-resistant porous engineering plastic material or a porous ceramic material.

In addition, a gasket 212 may be further included between the air supply part 216 and the air floating filter 213 to prevent air from leaking to the outside, and in this way, it is possible to implement a pressure of the air supplied to the air floating plate 214 to be constantly maintained.

In addition, the air floating plate 214 is provided with the discharge port 215 for discharging air to a side surface on which the electrode base material 1 travels, and the discharge port 215 may be formed on the entire surface of the air floating plate 214, that is, on the entire surface thereof or only in a region in which the coated portion of the electrode base material 1 travels.

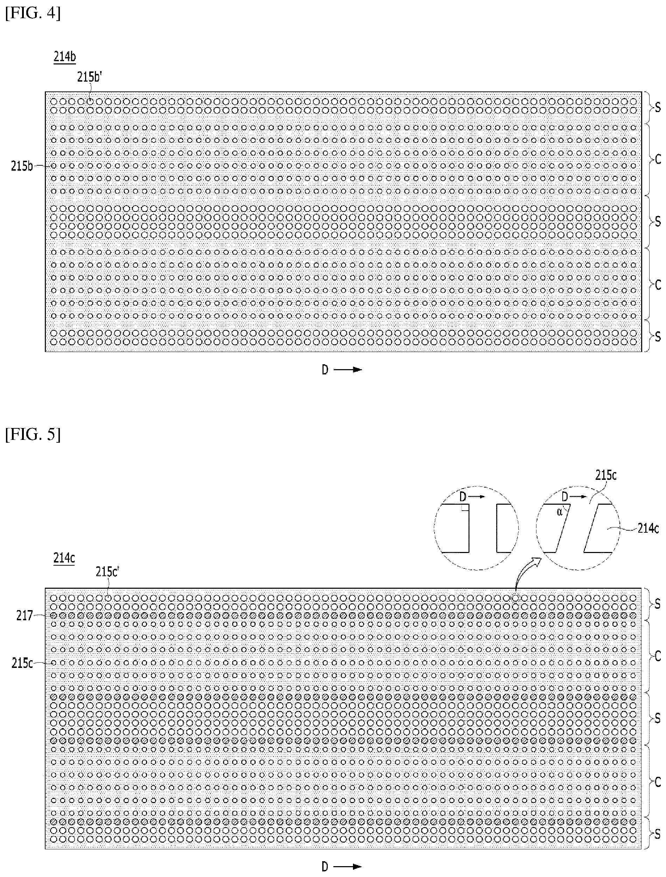

Specifically, FIGS. 3 to 5 are diagrams illustrating the surface of the air floating plate 214 according to the present invention. Air floating plates 214a, 214b and 214c include discharge ports 215a only in a region in which a coated portion C of the electrode base material travels as shown in FIG. 3 or include discharge ports 215b, 215b', 215c, and 215c' on the entire surfaces as shown in FIGS. 4 and 5.

As shown in FIG. 3, when the discharge ports 215a are included only in the region in which the coated portion C of the electrode base material travels, the air floating plate 214 may minimize the loss of air discharged to the surface of the electrode base material 1 to increase the flotation efficiency of the electrode base material 1. In addition, since the air floating plate 214 may induce rapid cooling of the coated portion, a temperature deviation between an electrode current collector and an active material layer (that is, the dried electrode slurry layer) which are positioned in the coated portion may be minimized to prevent the degradation of adhesive strength between the electrode current collector and the active material layer.

In addition, as shown in FIGS. 4 and 5, when the discharge ports 215b, 215b', 215c, and 215c' are included on the entirety of the surface of the electrode base material 1, the air floating plate 214 may minimize a cooling rate in a direction perpendicular to a direction in which the electrode base material 1 travels, that is, a deviation of the cooling rate in a width direction of the electrode base material 1 so that bending of the electrode base material 1 can be prevented from occurring.

Here, in the air floating plate 214, when the discharge ports 215b and 215b', 215c and 215c' are respectively included in the entirety of the surfaces of the air floating plate 214b and 214c, an average diameter of a discharge port or the number of discharge ports per unit area in the region C, in which the coated portion of the electrode base material travels, may be smaller than those of a discharge port in a region S in which the uncoated portion of the electrode base material to which the electrode slurry is not applied travels.

As one example, when the air floating plates 214b and 214c respectively include the discharge ports 215b and 215b', 215c and 215c' on the entirety of the surfaces, the discharge port of the region C in which the coated portion of the electrode base material travels may have an average diameter ranging from 50% to 99% of that of the discharge port in the region S in which the uncoated portion of the electrode base material to which the electrode slurry is not applied travels. Specifically, each discharge port of the air floating plates 214b and 214c may have an average diameter ranging from 50% to 95%, from 50% to 90%, from 50% to 85%, from 50% to 80%, from 50% to 75%, from 50% to 70%, from 60% to 90%, from 70% to 95%, from 80% to 99%, or from 75% to 90% of that of each discharge port of the region S in which the uncoated portion of the electrode base material travels.

Here, the discharge port of the region C in which the coated portion of the electrode base material travels is not particularly limited as long as it has an average diameter suitable for discharging air sufficient to float the electrode base material including the coated portion. Specifically, the discharge port may have an average diameter ranging from 0.005 mm to 10 mm, and more specifically, may have an average diameter ranging from 0.005 mm to 5 mm, from 0.005 mm to 3 mm, from 0.005 mm to 2 mm, from 0.005 mm to 1 mm, from 0.005 mm to 0.9 mm, from 0.005 mm to 0.5 mm, from 0.005 mm to 0.1 mm, from 0.005 mm to 0.05 mm, from 0.005 mm to 0.01 mm, from 0.01 mm to 0.03 mm, from 0.025 mm to 0.05 mm, from 0.06 mm to 0.09 mm, from 0.01 mm to 3 mm, from 0.05 mm to 2 mm, from 0.05 mm to 1 mm, from 0.1 mm to 1 mm, from 0.5 mm to 2 mm, from 0.5 mm to 0.9 mm, or from 0.01 mm to 0.1 mm.

As another example, when the air floating plates 214b and 214c respectively include the discharge ports 215b and 215b', 215c and 215c' on the entirety of the surfaces, the number of discharge ports per unit area of the region C in which the coated portion of the electrode base material travels may range from 50% to 99% of the number of discharge ports per unit area of the region S in which the uncoated portion of the electrode base material travels, and specifically, may range from 50% to 90%, from 60% to 90%, from 70% to 90%, from 60% to 80%, from 50% to 70%, or from 65% to 85% of the number of discharge ports per unit area of the region S in which the uncoated portion of the electrode base material travels.

According to the present invention, the average diameter and the number per unit area according to the positions of the discharge ports 215b and 215b', 215c and 215c' respectively introduced into the air floating plates 214b and 214c are controlled in the above ranges, and thus the electrode base material 1 on which the electrode slurry is applied may be stably floated and the uncoated portion in which the electrode slurry is not applied may be heated to a high temperature and then rapidly cooled to a temperature lower than room temperature to rapidly cure a base material of the uncoated portion. In this way, it is possible to improve a thermal expansion deviation of the electrode base material 1.

In addition, the discharge ports 215a, 215b and 215b', 215c and 215c' respectively introduced into the surface of the air floating plate 214a, 214b, and 214c may each have a porosity (aperture ratio) ranging from 20% to 80%, and specifically, from 30% to 70%. According to the present invention, the porosity (aperture ratio) of each discharge port introduced into the air floating plates 214a, 214b and 214c is controlled within the above range so that a flow of air discharged to the surfaces of the air floating plates 214a, 214b, and 214c may be smooth and an inflow of fine particles present in the air may be blocked.

In addition, the discharge ports 215a, 215b, 215b', 215c, and 215c' of the air floating plate applied to the present invention may be formed perpendicular to the direction D in which the electrode base material 1 travels, or as shown in FIG. 5, or may be provided to form an inclined angle α ranging from 30° to 80° with the surfaces of the air floating plates 214a, 214b, and 214c in the process direction D in which the electrode base material 1 travels. Specifically, the discharge ports 215a, 215b, 215b', 215c, and 215c' may be formed perpendicular to the direction D in which the electrode base material 1 travels or may be provided to form an inclined angle α, with the surfaces of the air floating plates 214a, 214b, and 214c, ranging from 30° to 70°, from 30° to 60°, from 30° to 50°, from 45° to 70°, from 60° to 80°, from 30° to 45°, or from 40° to 60°.

According to the present invention, by controlling the angles of the discharge ports 215a, 215b, 215b', 215c, and 215c' to satisfy the above range, the electrode base material may be moved with little energy due to the discharged air.

In addition, the air floating plates 214a, 214b, and 214c respectively include the discharge ports 215a, 215b and 215b', 215c and 215c' for discharging the air to the surface on which the electrode base material travels and may include vacuum suction holes 217 for suctioning the air, which is discharged through the discharge ports 215a, 215b, 215b', 215c, and 215c', again at positions adjacent to the discharge ports 215a, 215b, 215b', 215c, and 215c'.

The air floating plates 214a, 214b and 214c are not particularly limited as long as they are positioned adjacent to the discharge ports provided on the surfaces and may include the vacuum suction holes 217 for suctioning the discharged air again. Specifically, as shown in FIG. 5, the vacuum suction holes 217 may be provided between the region C in which the coated portion of the electrode base material 1 travels and the region S in which the uncoated portion of the electrode base material travels or a column of discharge ports and a column of vacuum suction holes 217 may be alternately provided in the direction D in which the electrode base material 1 travels.

The vacuum suction holes 217 are for stably transporting the dried electrode base material 1 and may be disposed at positions adjacent to the discharge ports 215a, 215b, 215b', 215c, and 215c' to facilitate air exhaust. In this way, a bending phenomenon of the electrode base material 1 may be minimized and it is possible to easily control fluctuations, floating flatness, and a height.

In addition, in the floating part 210, since the air floating plates 214a, 214b, and 214c may be separated and replaced, an air floating plate in which an average diameter and the number of discharge ports are controlled according to the specifications of the electrode to be manufactured may be applied.

In this case, as shown in FIGS. 3 to 5, the air floating plates 214a, 214b, and 214c may each have a structure in which discharge ports having an average diameter, the number per unit area, and/or porosity controlled according to the coated portion and the uncoated portion of the electrode base material 1 are provided on one plate-shaped base material.

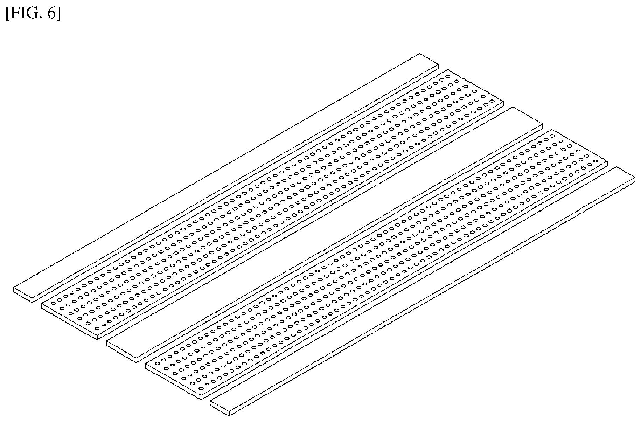

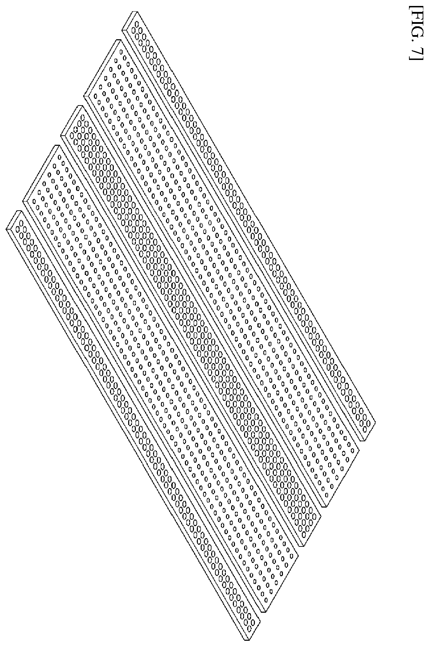

Alternatively, as shown in FIGS. 6 and 7, the air floating plates 214a, 214b, and 214c may each have a structure in which a plurality of rod-shaped base materials may be assembled according to positions of the coated portion and the uncoated portion of the electrode base material 1. In this case, processability and assemblability of the air floating plate are high so that there is an advantage in that the degree of freedom and responsiveness in terms of a design of the electrode base material is improved.

Meanwhile, the transfer part 200 includes a traveling part 220 as a part for moving the electrode base material 1 floated by the floating part 210. The traveling part 220 is not particularly limited as long as it can move the floated electrode base material 1, and specifically, may include a tilting machine for tilting and erecting the air floating plates 214a, 214b, 214c and a conveyor disposed at a front end and a rear end of the floating part 210 and configured to slide the electrode base material 1 in the process direction D.

Here, the tilting machine is a device for tilting the air floating plates 214a, 214b and 214c to be inclined so that the floated electrode base material 1 is moved in an inclined direction. A tilting frame is positioned on one side opposite to the surface on which the electrode base material 1 of each of the air floating plates 214a, 214b, and 214c travels so that the air floating plates 214a, 214b and 214c may be erected to be inclined.

The tilting machine is a device for applying an external force so that the electrode base material 1 floated by each of the air floating plates 214a, 214b, 214c is moved at an appropriate speed due to gravity and an inclined angle, and the inclined angle implemented by the tilting machine may range from 1° to 20°, and more specifically, from 1° to 15°, from 1° to 10°, from 5° to 15°, from 8° to 12°, or from 3° to 8°.

In addition, the conveyor may be disposed at each of the front end and the rear end of the floating part 210 to move the electrode base material 1. In this case, the conveyor may include one or more of a belt type conveyor and/or a roller type conveyor.

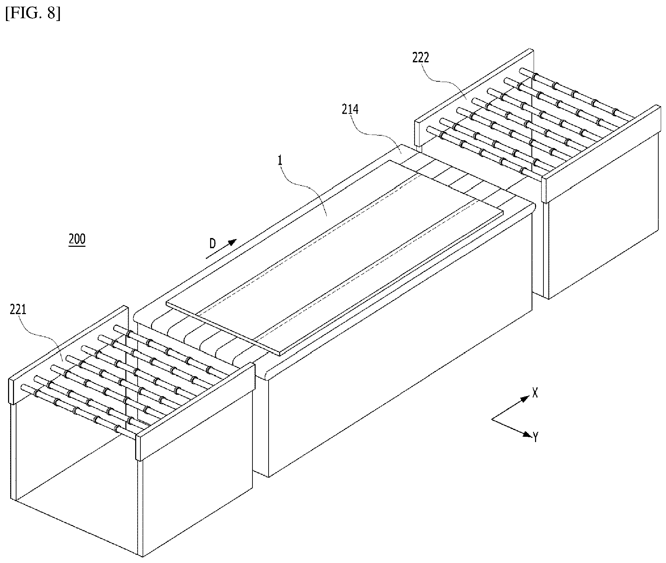

Specifically, FIG. 8 is a perspective view illustrating a case in which the transfer part 200 is provided with a conveyor as the traveling part 220. Referring to FIG. 8, the conveyor may include a first conveyor 221 positioned at the front end of the floating part 210 and a second conveyor 222 positioned at the rear end of the floating part. The first conveyor 221 and the second conveyor 222 may be formed to be coplanar with the air floating plate 214 of the floating part 210 to prevent jamming from occurring while the electrode base material 1 is moved.

In some cases, the transfer part 200 may further include an unwinder (not shown) for supplying the electrode base material 1 to the dryer 100 and a winder (not shown) for winding the electrode base material having passed through the dryer. The unwinder may supply the electrode base material 1 to the dryer, thereby applying a pushing force to the electrode base material 1 and moving the electrode base material 1 in the process direction D, and the winder may apply a pulling force to the dried electrode base material 1 in the process direction D, thereby moving the dried electrode base material 1. To this end, the unwinder may be located at a front end of the dryer 100, and the winder may be located at a rear end of the floating part 210.

Since the drying device 10 for manufacturing an electrode according to the present invention includes the above-described components, it is possible to improve the thermal expansion deviation of the electrode base material 1 dried at high temperature so that wrinkles and/or a folding problem induced in the uncoated portion of the electrode base material may be prevented. In addition, in the floating part 210, the air floating plate 214 in which the average diameter of the discharge ports 215 and/or the number of discharge ports 215 per unit area are controlled according to the specifications of the electrode to be manufactured may be replaced so that there is an advantage of excellent processability.

### Method of manufacturing electrode

In one embodiment of the present invention, there is provided a method of manufacturing an electrode, which includes drying an electrode base material in which an electrode slurry is applied on at least one surface of the electrode base material at a high temperature, and floating and transferring the high-temperature dried electrode base material using air.

The method of manufacturing an electrode according to the present invention may include applying the electrode slurry on at least one surface of the electrode base material to form an electrode mixture layer, and drying the electrode base material, on which the electrode slurry is applied, at high temperature, and floating and transferring the dried electrode base material using air and may be performed using the above-described drying device for manufacturing an electrode of the present invention.

Specifically, in the drying of the electrode base material, when the electrode base material (or electrode current collector) which has passed through the coater and on which the electrode slurry containing one or more electrode active materials is applied to the surface is introduced into the dryer of the drying device, a solvent in the electrode slurry applied to the electrode base material may be removed by a plurality of heating elements provided in the dryer and thus the applied electrode slurry may be cured to form an electrode mixture layer. In this case, a temperature in the dryer due to radiant heat of the heating elements may be specifically controlled in the range of 120 °C to 150 °C.

In addition, the transferring of the dried electrode base material may be performed by the transfer parts continuously coupled to the outlet of the dryer. Specifically, when the dried electrode base material exits through the outlet of the dryer, the dried electrode base material enters the transfer part coupled to the outlet. The entering electrode base material is floated by the air floating plate of the transfer part and is moved in the process direction in a state of being floated. Here, the air floating plate includes the discharge ports for discharging air to the surface of the electrode base material in a direction in which the electrode base material travels, and the air discharged through the discharge ports may float the dried electrode base material and may satisfy a predetermined range of a pressure and/or a temperature so as to improve wrinkles and/or a folding phenomenon occurring in the uncoated portion of the electrode base material due to the electrode slurry heated to a high temperature.

Specifically, the pressure of the air discharged through the discharge ports may be controlled in the range of 0.01 MPa to 0.5 MPa, and more specifically, in the range of 0.01 MPa to 0.4 MPa, 0.01 MPa to 0.3 MPa, 0.01 MPa to 0.2 MPa, 0.01 MPa to 0.1 MPa, 0.05 MPa to 0.2 MPa, 0.1 MPa to 0.5 MPa, 0.2 MPa to 0.4 MPa, 0.01 MPa to 0.09 MPa, or 0.05 MPa to 0.09 MPa.

As one example, when the discharge ports are included in the entirety of the surface of the air floating plate, the pressure of the air discharged from the region in which the coated portion of the electrode base material travels may range from 0.05 MPa to 0.4 MPa or from 0.1 MPa to 0.15 MPa, and the pressure of the air discharged from the region in which the uncoated portion of the electrode base material travels may range from 0.01 MPa to 0.2 MPa or 0.04 MPa to 0.07 MPa.

In addition, the temperature of the air discharged through the discharge ports may be controlled in the range of -10 °C to 30 °C, and specifically, in the range of -10 °C to 20 °C, -10 °C to 10 °C, -10 °C to 5 °C, 0 °C to 30°C, 5 °C to 20 °C, or 10 °C to 20 °C.

As one example, when the discharge ports are included in the entirety of the surface of the air floating plate, the temperature of the air discharged from the region in which the coated portion of the electrode base material travels may range from 10 °C to 20 °C, and the temperature of the air discharged from the region in which the uncoated portion of the electrode base material travels may range from -5 °C to 5 °C.

According to the present invention, by controlling the pressure and the temperature of the air discharged from the discharge ports of the air floating plate in the above-described ranges, the dried electrode base material may be stably floated, and the uncoated portion of the electrode base material, in which the high-temperature electrode slurry is not applied, is rapidly cured so that thermal expansion deviation between the coated portion and the uncoated portion may be reduced.

In addition, in the transferring of the dried electrode base material, a transfer speed of the electrode base material may be appropriately controlled to stably move the electrode base material in the state of being floated. To this end, the transfer speed of the electrode base material may be controlled in the range of 1 mm/s to 20 mm/s, and specifically in the range of 5 mm/s to 15 mm/s, or 8 mm/s to 12 mm/s.

Since the method of manufacturing an electrode according to the present invention includes the above-described components, it is possible to improve the thermal expansion deviation of the electrode base material dried at a high temperature so that wrinkles and/or a folding problem induced in the uncoated portion of the electrode base material may be prevented.

### [Detailed Description of the Preferred Embodiments]

Hereinafter, the present invention will be described in more detail with reference to examples and experimental examples.

However, the following examples and experimental examples are merely illustrative of the present invention, and the content of the present invention is not limited to the following examples and experimental examples.

### Experimental Example

In order to evaluate the performance of the drying device for manufacturing an electrode according to the present invention, the following experiment was performed.

Specifically, a steel plate having a length of 1500 cm × a width of 600 cm × a thickness of 0.6 cm was prepared, and discharge ports having an average diameter and the number per unit area as shown in Table 1 were formed on a surface of the steel plate to manufacture an air floating plate.

Then, separately, a first conveyor in the form of a roller, a floating part, and a second conveyor in the form of a roller were coupled to the outlet of the dryer having an internal temperature of about 130 °C by a halogen lamp, and the air floating plate produced in advance was mounted on a front portion of the floating part to prepare the drying device for manufacturing an electrode. In this case, as shown in FIG. 2, the floating part has a structure in which the gasket 212, the air floating filter 213, and the air floating plate 214 are sequentially stacked on the lower table 211 provided with an air supply hole 211a, and an air supply part 216 is coupled to the air supply hole 211a of the lower table 211 so that the floating part has a structure in which air is supplied to the air floating plate 214.

**[Table 1]**

| | Traveling region in which coated portion of electrode base material travels | | | Traveling region in which uncoated portion of electrode base material travels | | |
|---|---|---|---|---|---|---|
| | Average diameter of discharge ports [mm] | Number of discharge ports per unit area (10 cm X 10 cm) | Air pressure [MPa] | Average diameter of discharge ports [mm] | Number of discharge ports per unit area (10 cm X 10 cm) | Air pressure [MPa] |
| Example 1 | 1 | 25 | 0.2 | 0 | 0 | 0 |
| Example 2 | 0.05 | 25 | 0.2 | 0.0625 | 30 | 0.3 |
| Example 3 | 1 | 25 | 0.2 | 1.25 | 30 | 0.3 |
| Example 4 | 0 | 0 | 0 | 1.25 | 30 | 0.3 |
| Example 5 | 0.001 | 25 | 0.2 | 0.00125 | 30 | 0.3 |
| Example 6 | 15 | 25 | 0, 2 | 18.75 | 30 | 0.3 |
| Example 7 | 1 | 25 | 0.2 | 0.4 | 30 | 0.3 |
| Example 8 | 1 | 25 | 0.2 | 1 | 30 | 0.3 |
| Example 9 | 1 | 25 | 0.2 | 1.25 | 10 | 0.3 |
| Example 10 | 1 | 25 | 0.2 | 1.25 | 40 | 0.3 |
| Example 11 | 1 | 25 | 0.01 | 1.25 | 30 | 0.015 |
| Example 12 | 1 | 25 | 1 | 1.25 | 30 | 1.5 |
| Comparative Example 1 | 0 | 0 | 0 | 0 | 0 | 0 |

The electrode base material on which the electrode slurry was applied was dried and transferred (a transfer speed of about 11 mm/s) using the prepared drying device for manufacturing an electrode. In this case, the temperature of the air discharged from the air floating plate was controlled to a temperature of 20 °C in the region in which the coated portion of the electrode base material traveled and was controlled to a temperature of 10 °C in the region in which the uncoated portion of the electrode base material traveled. In addition, a degree of floating of each electrode and whether wrinkles and/or folding occurred in the uncoated portion of the electrode base material were checked. The evaluation criteria are as follows, and the results are shown in Table 2 below.
① Evaluation whether electrode base material was floated:
   - ○: The electrode base material was stably floated
   - △: The electrode base material was floated but it is not suitable for the process due to severe shaking.
   - ×: The electrode base material was not floated at all.
② Whether wrinkles/folding occurred in the uncoated portion of the electrode base material
   - ○: An area where wrinkles/folding occurred in the uncoated portion area was less than 5% of the total area.
   - △: An area where the wrinkles/folding occurred in the uncoated portion area was 5% or more and less than 50% of the total area.
   - ×: An area where wrinkles/folding occur in the uncoated portion area was 50% or more of the total area.

**[Table 2]**

| | ① Whether electrode base material was floated | Whether wrinkles/folding occurred in the uncoated portion |
|---|---|---|
| Example 1 | ○ | × |
| Example 2 | ○ | × |
| Example 3 | ○ | × |
| Example 4 | × | △ |
| Example 5 | × | ○ |
| Example 6 | △ | Δ |
| Example 7 | △ | × |
| Example 8 | △ | △ |
| Example 9 | × | ○ |
| Example 10 | △ | × |
| Example 11 | × | ○ |
| Example 12 | △ | × |
| Comparative Example 1 | × | ○ |

As shown in Table 2 above, the drying device for manufacturing an electrode according to the present invention may float the electrode base material dried at a high temperature to safely move the electrode base material using air and reduce the thermal expansion deviation between the coated portion and the uncoated portion of the electrode base material due to the high temperature drying so that it can be seen that an effect of improving wrinkles and/or a folding phenomenon of the uncoated portion is excellent.

From the above results, the drying device for manufacturing an electrode according to the present invention can dry the electrode base material on which the electrode slurry is applied at a high temperature and then float and move the electrode base material and can prevent wrinkles and/or a folding phenomenon due to the thermal expansion deviation between the coated portion and the uncoated portion of the electrode base material without damage to the coated portion so that it can be seen that processability is excellent.

Although the above description has been made with reference to exemplary embodiments of the present invention, it should be understood that various alterations and modifications of the present invention can be devised by those skilled in the art to which the present invention pertains without departing from the scope of the present invention, which is defined by the appended claims.

Therefore, the technical scope of the present invention should not be limited to the contents described in the detailed description of this specification but should be determined by the scope of the appended claims.

### [Description of Reference Numerals]

1: electrode base material 10: drying device for manufacturing an electrode
100: dryer 110: dryer outlet
200: transfer part 210: floating part
211: lower table 211a: air supply hole
212: gasket 213: air floating filter
213a: fine hole
214, 214a, 214b, and 214c: air floating plates
215, 215a, 215b, 215b', and 215c: discharge ports of air floating plates
216: air supply part 217: air suction hole
220: traveling part 221: first conveyor
222: second conveyor D: process direction of electrode
S: traveling region in which uncoated portion of electrode base material travels
C: traveling region in which coated portion of electrode base material travels

## Claims

1. A drying device (10) for manufacturing an electrode, comprising:
a dryer (100) configured to dry a coated portion of an electrode base material (1) in which the coated portion to which an electrode slurry is applied is formed on at least one surface of the electrode base material (1) and an uncoated portion to which the electrode slurry is not applied; and
a transfer part (200) coupled to an outlet (110) of the dryer (100) and configured to move the dried electrode base material (1) in a process direction (D),
wherein the transfer part (200) includes:
a floating part (210) configured to float the electrode base material (1) using air and provided with an air floating plate (214); and
a traveling part (220) configured to move the floated electrode base material (1) in the process direction (D),
wherein:
the air floating plate (214) includes discharge ports (215) configured to discharge air to a surface on which the electrode base material (1) travels; and
the discharge ports (215) are included in the entirety of a surface of the air floating plate (214) or included only in a region (C) in which the coated portion of the electrode base material (1) travels,
**characterized in that** the discharge ports (215) are provided to form an inclined angle (α) of 30° to 80° with the surface of the air floating plate (214) in the process direction (D) of the electrode base material (1).

2. The drying device (10) of claim 1, wherein, when the discharge ports (215) are included in the entirety of the surface of the air floating plate (214), discharge ports (215b) in a region (C) in which the coated portion of the electrode base material (1) travels have an average diameter ranging from 50% to 99% of that of discharge ports (215b') in a region (S) in which the uncoated portion of the electrode base material (1) on which the electrode slurry is not applied travels.

3. The drying device (10) of claim 1, wherein the discharge ports (215b) of the region (C) in which the coated portion of the electrode base material (1) travels have an average diameter ranging from 0.005 mm to 10 mm.

4. The drying device (10) of claim 1, wherein, when the discharge ports (215) are included in the entirety of the surface of the air floating plate (214), the number of discharge ports (215b) per unit area of a region (C) in which the coated portion of the electrode base material (1) travels ranges from 50 % to 99% of the number of discharge ports (215b') per unit area of a region (S) in which the uncoated portion of the electrode base material (1) travels.

5. The drying device (10) of claim 1, wherein the air floating plate (214c) includes vacuum suction holes (217) configured to suction the discharged air at positions adjacent to the discharge ports (215).

6. The drying device (10) of claim 1, wherein the traveling part (220) includes:
a tilting machine configured to tilt the air floating plate (214); or
conveyors (221, 222) disposed at a front end and a rear end of the floating part (210) and configured to slide the electrode base material (1) in the process direction (D).

7. A method of manufacturing an electrode using the drying device of any one of the previous claims, comprising:
drying an electrode base material (1) in which electrode slurry is applied on at least one surface of the electrode base material (1) at a high temperature; and
floating and transferring the high-temperature dried electrode base material (1) using air.

8. The method of claim 7, wherein the floating of the electrode base material (1) is performed by air discharged from the discharge ports (215) provided in the air floating plate (214).

9. The method of claim 8, wherein a pressure of the air discharged from the discharge ports (215) ranges from 0.01 MPa to 0.5 MPa.

10. The method of claim 9, wherein, when the discharge ports (215) are included in the entirety of a surface of the air floating plate (214), a pressure of the air discharged in a region (C) in which a coated portion of the electrode base material (1) travels ranges from 0.05 MPa to 0.4 MPa, and a pressure of the air discharged in a region (S) in which an uncoated portion of the electrode base material (1) travels ranges from 0.01 MPa to 0.2 MPa.

11. The method of claim 7, wherein the air used in the transferring of the electrode base material (1) has a temperature ranging from -10 °C to 30 °C.

12. The method of claim 7, wherein the transferring of the electrode base material (1) is performed at a transfer speed ranging from 1 mm/s to 20 mm/s.

## Patentansprüche

1. Trocknungsvorrichtung (10) zum Herstellen einer Elektrode, umfassend:
einen Trockner (100), welcher dazu eingerichtet ist, einen beschichteten Abschnitt eines Elektrodenbasismaterials (1) zu trocknen, in welchem der beschichtete Abschnitt, an welchem eine Elektrodenaufschlämmung aufgetragen ist, auf mindestens einer Oberfläche des Elektrodenbasismaterials (1) gebildet wird, und einen unbeschichteten Abschnitt, an welchem die Elektrodenaufschlämmung nicht aufgetragen ist; und
einen Transferteil (200), welcher an einen Auslass (110) des Trockners (100) gekoppelt und dazu eingerichtet ist, das getrocknete Elektrodenbasismaterial (1) in eine Verfahrensrichtung (D) zu bewegen,
wobei der Transferteil (200) umfasst:
einen Schwebeteil (210), welcher dazu eingerichtet ist, das Elektrodenbasismaterial (1) unter Verwendung von Luft schweben zu lassen, und welcher mit einer Luftschwebeplatte (214) bereitgestellt ist; und
einen beweglichen Teil (220), welcher dazu eingerichtet ist, das schwebende Elektrodenbasismaterial (1) in der Verfahrensrichtung (D) zu bewegen,
wobei:
die Luftschwebeplatte (214) Auslassöffnungen (215) umfasst, welche dazu eingerichtet sind, Luft zu einer Oberfläche auszulassen, an welcher sich das Elektrodenbasismaterial (1) bewegt; und
die Auslassöffnungen (215) in der Gesamtheit einer Oberfläche der Luftschwebeplatte (214) umfasst sind oder nur in einer Region (C) umfasst sind, in welcher sich der beschichtete Abschnitt des Elektrodenbasismaterials (1) bewegt,
**dadurch gekennzeichnet, dass** die Auslassöffnungen (215) dazu bereitgestellt sind, mit der Oberfläche der Luftschwebeplatte (214) in der Verfahrensrichtung (D) des Elektrodenbasismaterials (1) einen Neigungswinkel (α) von 30° bis 80° zu bilden.

2. Trocknungsvorrichtung (10) nach Anspruch 1, wobei, wenn die Auslassöffnungen (215) in der gesamten Oberfläche der Luftschwebeplatte (214) umfasst sind, Auslassöffnungen (215b) in einer Region (C), in welcher sich der beschichtete Abschnitt des Elektrodenbasismaterials (1) bewegt, einen durchschnittlichen Durchmesser aufweisen, welcher von 50 % bis 99 % von dem der Auslassöffnungen (215b') in einer Region (S) reicht, in welcher sich der unbeschichtete Abschnitt des Elektrodenbasismaterials (1), auf welchem die Elektrodenaufschlämmung nicht aufgetragen ist, bewegt.

3. Trocknungsvorrichtung (10) nach Anspruch 1, wobei die Auslassöffnungen (215b) der Region (C), in welcher sich der beschichtete Abschnitt des Elektrodenbasismaterials (1) bewegt, einen durchschnittlichen Durchmesser aufweisen, welcher von 0,005 mm bis 10 mm reicht.

4. Trocknungsvorrichtung (10) nach Anspruch 1, wobei, wenn die Auslassöffnungen (215) in der Gesamtheit der Oberfläche der Luftschwebeplatte (214) umfasst sind, die Anzahl der Auslassöffnungen (215b) pro Flächeneinheit einer Region (C), in welcher sich der beschichtete Abschnitt des Elektrodenbasismaterials (1) bewegt, von 50 % bis 99 % der Anzahl der Auslassöffnungen (215b') pro Flächeneinheit einer Region (S) reicht, in welcher sich der unbeschichtete Abschnitt des Elektrodenbasismaterials (1) bewegt.

5. Trocknungsvorrichtung (10) nach Anspruch 1, wobei die Luftschwebeplatte (214c) Vakuumansauglöcher (217) umfasst, welche dazu eingerichtet sind, die ausgelassene Luft an Positionen benachbart zu den Auslassöffnungen (215) anzusaugen.

6. Trocknungsvorrichtung (10) nach Anspruch 1, wobei der bewegliche Teil (220) umfasst:
eine Kippmaschine, welche dazu eingerichtet ist, die Luftschwebeplatte (214) zu kippen; oder
Förderer (221, 222), welche an einem vorderen Ende und einem hinteren Ende des Schwebeteils (210) angeordnet sind und welche dazu eingerichtet sind, das Elektrodenbasismaterial (1) in der Verfahrensrichtung (D) zu verschieben.

7. Verfahren des Herstellens einer Elektrode unter Verwendung der Trocknungsvorrichtung nach einem der vorhergehenden Ansprüche, umfassend:
Trocknen eines Elektrodenbasismaterials (1), in welchem Elektrodenaufschlämmung auf mindestens eine Oberfläche des Elektrodenbasismaterials (1) bei einer hohen Temperatur aufgetragen wird; und
Schweben und Transferieren des hochtemperaturgetrockneten Elektrodenbasismaterials (1) unter Verwendung von Luft.

8. Verfahren nach Anspruch 7, wobei das Schweben des Elektrodenbasismaterials (1) durch Luft durchgeführt wird, welche aus den Auslassöffnungen (215) ausgelassen wird, welche in der Luftschwebeplatte (214) bereitgestellt sind.

9. Verfahren nach Anspruch 8, wobei ein Druck der Luft, welche von den Auslassöffnungen (215) ausgelassen wird, von 0,01 MPa bis 0,5 MPa reicht.

10. Verfahren nach Anspruch 9, wobei, wenn die Auslassöffnungen (215) in der Gesamtheit einer Oberfläche der Luftschwebeplatte (214) umfasst sind, ein Druck der Luft, welche in einer Region (C) ausgelassen wird, in welcher sich ein beschichteter Abschnitt des Elektrodenbasismaterials (1) bewegt, von 0,05 MPa bis 0,4 MPa reicht, und ein Druck der Luft, welche in einer Region (S) ausgelassen wird, in welcher sich ein unbeschichteter Abschnitt des Elektrodenbasismaterials (1) bewegt, von 0,01 MPa bis 0,2 MPa reicht.

11. Verfahren nach Anspruch 7, wobei die Luft, welche beim Transferieren des Elektrodenbasismaterials (1) verwendet wird, eine Temperatur aufweist, welche von -10°C bis 30°C reicht.

12. Verfahren nach Anspruch 7, wobei das Transferieren des Elektrodenbasismaterials (1) bei einer Transfergeschwindigkeit durchgeführt wird, welche von 1 mm/s bis 20 mm/s reicht.

## Revendications

1. Dispositif de séchage (10) pour fabriquer une électrode, comprenant :
un sécheur (100) configuré pour sécher une portion revêtue d'un matériau de base d'électrode (1) dans lequel la portion revêtue sur laquelle une suspension d'électrode est appliquée est formée sur au moins une surface du matériau de base d'électrode (1) et une portion non revêtue sur laquelle la suspension d'électrode n'est pas appliquée ; et
une partie de transfert (200) accouplée à une sortie (110) du sécheur (100) et configurée pour déplacer le matériau de base d'électrode (1) séché dans une direction de processus (D),
dans lequel la partie de transfert (200) comporte :
une partie de flottement (210) configurée pour faire flotter le matériau de base d'électrode (1) en utilisant de l'air et dotée d'une plaque d'aérosustentation (214) ; et
une partie de transport (220) configurée pour déplacer le matériau de base d'électrode (1) flottant dans la direction de processus (D),
dans lequel :
la plaque d'aérosustentation (214) comporte des orifices de déversement (215) configurés pour déverser de l'air vers une surface sur laquelle le matériau de base d'électrode (1) est transporté ; et
les orifices de déversement (215) sont compris dans la totalité d'une surface de la plaque d'aérosustentation (214) ou compris uniquement dans une région (C) dans laquelle la portion revêtue du matériau de base d'électrode (1) est transportée,
**caractérisé en ce que** les orifices de déversement (215) sont prévus pour former un angle incliné (α) de 30° à 80° avec la surface de la plaque d'aérosustentation (214) dans la direction de processus (D) du matériau de base d'électrode (1).

2. Dispositif de séchage (10) selon la revendication 1, dans lequel, lorsque les orifices de déversement (215) sont compris dans la totalité de la surface de la plaque d'aérosustentation (214), des orifices de déversement (215b) dans une région (C) dans laquelle la portion revêtue du matériau de base d'électrode (1) est déplacée ont un diamètre moyen allant de 50 % à 99 % de celui d'orifices de déversement (215b') dans une région (S) dans laquelle la portion non revêtue du matériau de base d'électrode (1) sur laquelle la suspension d'électrode n'est pas appliquée est transportée.

3. Dispositif de séchage (10) selon la revendication 1, dans lequel les orifices de déversement (215b) de la région (C) dans laquelle la portion revêtue du matériau de base d'électrode (1) est transportée ont un diamètre moyen allant de 0,005 mm à 10 mm.

4. Dispositif de séchage (10) selon la revendication 1, dans lequel, lorsque les orifices de déversement (215) sont compris dans la totalité de la surface de la plaque d'aérosustentation (214), le nombre d'orifices de déversement (215b) par zone unitaire d'une région (C) dans laquelle la portion revêtue du matériau de base d'électrode (1) est transportée va de 50 % à 99 % du nombre d'orifices de déversement (215b') par zone unitaire d'une région (S) dans laquelle la portion non revêtue du matériau de base d'électrode (1) est transportée.

5. Dispositif de séchage (10) selon la revendication 1, dans lequel la plaque d'aérosustentation (214c) comporte des orifices à succion (217) configurés pour aspirer l'air déversé à des positions adjacentes aux orifices de déversement (215).

6. Dispositif de séchage (10) selon la revendication 1, dans lequel la partie de transport (220) comporte :
une machine d'inclinaison configurée pour incliner la plaque d'aérosustentation (214) ; ou
des convoyeurs (221, 222) disposés à une extrémité avant et une extrémité arrière de la partie de flottement (210) et configurés pour faire glisser le matériau de base d'électrode (1) dans la direction de processus (D).

7. Procédé de fabrication d'une électrode utilisant le dispositif de séchage selon l'une quelconque des revendications précédentes, comprenant :
le séchage d'un matériau de base d'électrode (1) dans lequel une suspension d'électrode est appliquée sur au moins une surface du matériau de base d'électrode (1) à une haute température ; et
le flottement et le transfert du matériau de base d'électrode (1) séché à haute température en utilisant de l'air.

8. Procédé selon la revendication 7, dans lequel le flottement du matériau de base d'électrode (1) est réalisé par de l'air déversé à partir des orifices de déversement (215) prévus dans la plaque d'aérosustentation (214).

9. Procédé selon la revendication 8, dans lequel une pression de l'air déversé à partir des orifices de déversement (215) va de 0,01 MPa à 0,5 MPa.

10. Procédé selon la revendication 9, dans lequel, lorsque les orifices de déversement (215) sont compris dans la totalité d'une surface de la plaque d'aérosustentation (214), une pression de l'air déversé dans une région (C) dans laquelle une portion revêtue du matériau de base d'électrode (1) est transportée va de 0,05 MPa à 0,4 MPa, et une pression de l'air déversé dans une région (S) dans laquelle une portion non revêtue du matériau de base d'électrode (1) est transportée va de 0,01 MPa à 0,2 MPa.

11. Procédé selon la revendication 7, dans lequel l'air utilisé dans le transfert du matériau de base d'électrode (1) a une température allant de -10 °C à 30 °C.

12. Procédé selon la revendication 7, dans lequel le transfert du matériau de base d'électrode (1) est réalisé à une vitesse de transfert allant de 1 mm/s à 20 mm/s.
